# EUROPÄISCHE PATENTSCHRIFT

(11) **EP 0 419 959 B1**
(45) Veröffentlichungstag und Bekanntmachung des Hinweises auf die Patenterteilung: **03.04.1996**
(21) Anmeldenummer: 90117685.9
(22) Anmeldetag: 13.09.1990
(51) Int. Cl.: H04L 12/56

(54) **Schaltungsanordnung zum Überprüfen der Einhaltung festgelegter Übertragungsbitraten bei der Übertragung von Nachrichtenzellen**
Circuit arrangement for testing the adherence to pre-established bit rates in the transmission of information cells
Circuit pour contrôler le respet de débits préétablis lors de la transmission de cellules de données

(30) Priorität: 29.09.1989 DE 3932606
(43) Veröffentlichungstag der Anmeldung: 03.04.1991
(73) Patentinhaber: SIEMENS AKTIENGESELLSCHAFT, D-80333 München (DE)
(72) Erfinder: Danner, Gerd, Dipl.-Phys., D-8000 München 21 (DE)

(56) Entgegenhaltungen:
- EP-A- 0 236 818
- EP-A- 0 293 315
- EP-A- 0 310 173

## Beschreibung

Die Erfindung betrifft eine Schaltungsanordnung gemäß Oberbegriff des Patentanspruches 1.

Zur Vermeidung von Überlast bei der Übertragung von Zellen in Breitband-Vermittlungssystemen ist bereits vorgeschlagen worden (international Zürich Seminar on Digital Communications, März 1986, "New Directions in Communications" A3.1 bis A3.8, J. B. Turner), in einem Vermittlungsknoten jeder damit verbundenen Teilnehmereinrichtung einen Vorwärts-Rückwärts-Zähler zuzuordnen, welcher die von der jeweiligen Teilnehmereinrichtung gesendeten Zellen zählt und den momentanen Zahlerstand entsprechend der von der jeweiligen Teilnehmereinrichtung festgelegten Übertragungsgeschwindigkeit zu bestimmten Zeitpunkten erniedrigt. Überschreitet dabei der momentane Zählerstand einen von der jeweiligen Teilnehmereinrichtung vorgebbaren Wert, so erkennt der Vermittlungsknoten eine Überlast ("Leaky-bucket"-Verfahren).

Darüber hinaus ist eine weitere Schaltungsanordnung zur Vermeidung von Überlast in einem Breitband-Vermittlungssystem bekannt (DE-OS 37 32 937). Bei dieser Schaltungsanordnung sind in einem Vermittlungsknoten jeder damit verbundenen Teilnehmereinrichtung anstelle eines Vorwärts-Rückwärts-Zählers zwei Vorwärts-Zähler zugeordnet, wobei ein erster Zähler die von der jeweiligen Teilnehmereinrichtung gesendeten Zellen zählt und der verbleibende Zähler die während der bestehenden Verbindung aufgelaufene Verbindungszeit bestimmt. Die beiden Zähler sind mit einer Einrichtung verbunden, die aus dem Verhältnis der Zählerstände das Einhalten der von der jeweiligen Teilnehmereinrichtung bestimmten maximalen Bitrate überprüft.

Schließlich ist aus EP 0 293 315 A1 eine Schaltungsanordnung für die Steuerung der Übertragung von Datenpaketen in einem nach dem ATM-Prinzip arbeitenden System bekannt. Dieses System verfügt über eine Mehrzahl von virtuellen Verbindungen individuell zugeordneten Zähleinrichtungen, die von einer zentralen Steuereinrichtung her gesteuert werden. Jede diese Zähleinrichtungen ist aus einem Vor-/Rückwärtszähler gebildet, dessen momentaner Zählerstand mit jedem Auftreten eines Datenpaketes der der jeweiligen Zähleinrichtung zugeordneten virtuellen Verbindung um den Wert "1" inkrementiert wird. Zusätzlich wird jedoch der momentane Zählerstand nach Maßgabe der für die jeweilige virtuelle Verbindung geforderten maximalen Übertragungsbitrate und der Zeitdifferenz zwischen dem Auftreten des gerade vorliegenden Datenpakets und des unmittelbar vorangegangenen Datenpaketes derselben virtuellen Verbindung dekrementiert. Die Vor-/Rückwärtszähler arbeiten also nach dem sog. "Leaky-Bucket"-Prinzip. Überschreitet der durch das Inkrementieren und Dekrementieren resultierende momentane Zählerstand eines Vor-/Rückwärtszählers einen festgelegten Schwellwert, so wird von dem jeweiligen Zähler ein Meldesignal abgegeben, durch welches ein Überschreiten der maximalen Übertragungsbitrate angezeigt wird.

Für das genannten Dekrementieren sind für die einzelnen möglichen maximalen Übertragungsbitraten individuelle Taktgeneratoren erforderlich, die für die virtuellen Verbindungen individuell bei Auftreten einer Nachrichtenzelle auswählbar sein müssen. Hiermit sind in Abhängigkeit von der Anzahl der wählbaren maximalen Übertragungsbitraten ggf. ein erheblicher Steuerungsaufwand und schaltungstechnischer Aufwand verbunden.

Es ist nun Aufgabe der vorliegenden Erfindung, einen Weg zu zeigen, wie eine Schaltungsanordnung gemäß Oberbegriff des Patentanspruches 1 ausgebildet werden kann, um für sämtliche über die jeweilige Zubringerleitung verlaufenden virtuellen Verbindungen die Einhaltung festgelegter Übertragungsbitraten mit einem geringen Steuerungsaufwand und schaltungstechnischem Aufwand überprüfen zu können.

Die Erfindung bringt den Vorteil mit sich, daß dadurch, daß für den Zählbetrieb der unidirektionalen Zähleinrichtungen lediglich im Zuge des Aufbaus einer virtuellen Verbindung ein der geforderten maximalen Übertragungsbitrate entsprechender Bitratenwert festzuhalten ist, um den bei Auftreten einer Nachrichtenzelle dieser virtuellen Verbindung der momentanen Zählerstand der jeweiligen Zähleinrichtung zu verändern ist, durch die verbindungsindividuellen Zähleinrichtungen in einfacher Weise die über beliebige, mit einer ATM-Vermittlungsanlage verbundene Zubringerleitungen verlaufenden virtuellen Verbindungen individuell hinsichtlich der Einhaltung festgelegter Übertragungsbitraten überprüft werden können. So ist beispielsweise eine verbindungsindividuelle Überprüfung festgelegter Übertragungsbitraten für Zubringerleitungen möglich, die im Multiplexbetrieb von einer Vielzahl von Teilnehmereinrichtungen gemeinsam benutzt sind. Ebenso ist eine solche verbindungsindividuelle Überprüfung auch für den Fall durchführbar, daß Teilnehmereinrichtungen gleichzeitig in mehrere virtuelle Verbindungen einbezogen sind.

Für eine verbindungsindividuelle Überprüfung festgelegter Übertragungsbitraten ist es bei der vorliegenden Erfindung für den Fall, daß Nachrichtensignale im Zuge virtueller Verbindungen in Form von Nachrichtenzellen fester Länge übertragen werden, ausreichend, mit jeder Ansteuerung einer Zähleinrichtung aufgrund des Auftretens einer von dieser zu erfassenden Nachrichtenzelle den momentanen Zählerstand lediglich einmal um den der festgelegten Übertragungsbitrate entsprechenden Bitratenwert zu verändern. Erfolgt dagegen eine Übertragung von Nachrichtensignalen im Zuge von virtuellen Verbindungen in Nachrichtenzellen variabler Länge, so ist es gemäß Patentanspruch 2 zweckmäßig, daß auf eine derartige Ansteuerung einer Zähleinrichtung hin deren momentaner Zählerstand nach jeweils einer festgelegten Anzahl von der gerade auftretertden Nachrichtenzelle zugehörigen Bits um den genannten Bitratenwert verändert ist. Diese Anzahl kann dabei entsprechend der für die Überprüfung von Übertragungsbitraten geforderten Genauigkeit festgelegt werden.

Weitere vorteilhafte Ausgestaltungen der vorliegenden Erfindung ergeben sich aus den Patentansprüchen 3 bis 5. Der Vorteil dieser Ausgestaltung besteht einerseits in der einfachen Steuerung der den Zubringerleitungen jeweils zugeordneten Zähleinrichtungen und andererseits in dem besonders geringen schaltungstechnischen Aufwand für die Realisierung dieser Zähleinrichtungen.

Im folgenden wird nun die Erfindung anhand von Zeichnungen beispielsweise näher erläutert.
FIG 1 zeigt ein Blockschaltbild einer ATM-Vermittlungsanlage, bei der die Erfindung angewandt ist,
FIG 2 zeigt einen möglichen Aufbau der in FIG 1 lediglich schematisch dargestellten Behandlungseinrichtungen und
FIG 3 zeigt ein Ausführungsbeispiel für die in FIG 2 schematisch dargestellte Steuereinrichtung.

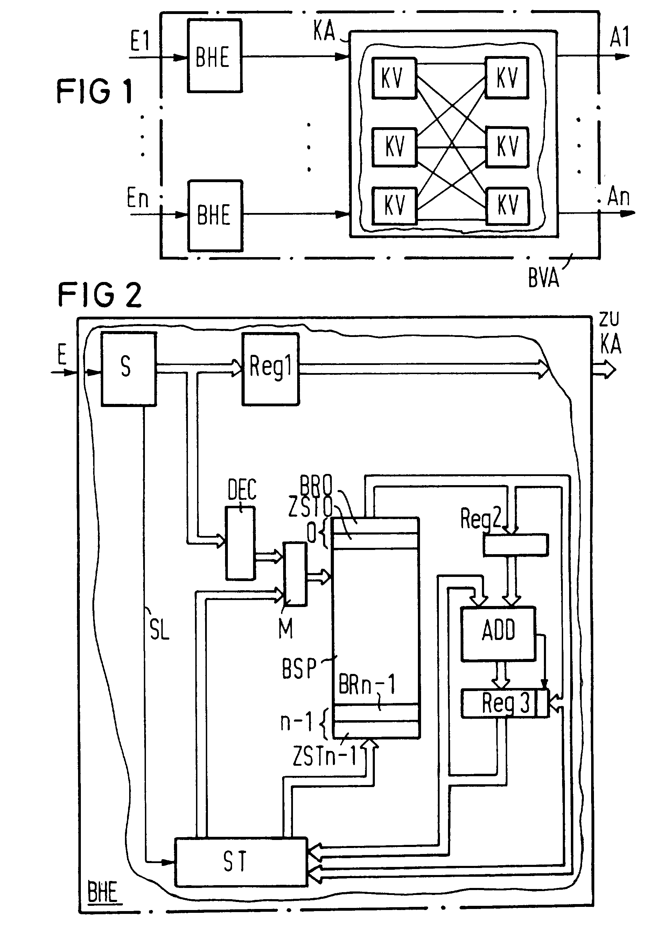

In FIG 1 ist eine ATM-Vermittlungsanlage BVA schematisch dargestellt, an welche eine Mehrzahl von Zubringerleitungen E1 bis En sowie eine Mehrzahl von Abnehmerleitungen A1 bis An angeschlossen sind. Von diesen sind in FIG 1 lediglich die Zubringerleitungen E1 und En und die Abnehmerleitungen A1 bis An angegeben. Auf den Zubringerleitungen und Abnehmerleitungen erfolgt jeweils eine Übertragung von Nachrichtenzellen im Zuge von virtuellen Verbindungen nach einem asynchronen Übertragungsverfahren ("Asynchronous Transfer Mode"). Bei den Nachrichtenzellen möge es sich um Zellen fester Länge handeln, welche jeweils über einen Zellenkopf mit einer die jeweilige virtuelle Verbindung bezeichnenden virtuellen Kanalnummer sowie einen Informationsteil verfingen. In dem Informationsteil erfolgt die Übertragung der eigentlichen Nachrichtensignale. Unter Nachrichtensignalen sollen dabei Daten- und Textsignale sowie Sprach- bzw. Bildsignale in digitaler Form verstanden werden. Im übrigen sei hier bereits darauf hingewiesen, daß die vorliegende Erfindung auch dann anwendbar ist, wenn Nachrichtensignale im Zuge von virtuellen Verbindungen in Zellen variabler Lange übertragen werden.

Wie aus FIG 1 hervorgeht, ist jeder der Zubringerleitungen E1 bis En eine Behandlungseinrichtung BHE zugeordnet. Eine solche Behandlungseinrichtung, auf deren Aufbau im folgenden noch näher eingegangen wird, nimmt die im Zuge von virtuellen Verbindungen über die zugeordnete Zubringerleitung übertragenen Nachrichtenzellen auf und führt vor deren Weiterleitung an eine Koppelanordnung KA der ATM-Vermittlungsanlage verbindungsindividuell eine Überprüfung der Einhaltung der für die jeweilige virtuelle Verbindung festgelegten Übertragungsbitrate durch. Für die Koppelanordnung KA ist im übrigen in FIG 1 lediglich als Beispiel ein mehrstufiger Aufbau mit einer Mehrzahl von untereinander verbundenen Koppelvielfachen KV angegeben. Es können jedoch auch beliebige ein- oder mehrstufige Koppelanordnungen benutzt sein. Da der Aufbau und die Wirkungsweise derartiger Koppelanordnungen für die Weiterleitung von Nachrichtenzellen an in FIG 1 mit A1 bis An bezeichnete Abnehmerleitungen bekannt ist, wird im folgenden darauf nicht näher eingegangen.

In FIG 2 ist ein möglicher Aufbau der zuvor erwähnten, in gleicher Weise aufgebauten Behandlungseinrichtungen BHE dargestellt. Dabei sind lediglich diejenigen Schaltungsteile angegeben, die für das Verständnis der vorliegenden Erfindung erforderlich sind.

Mit der jeweiligen Zubringerleitung, die in FIG 2 mit E bezeichnet ist, ist eine Schnittstelleneinrichtung S verbunden, welche einerseits den Beginn von in serieller Form übertragenen Nachrichtenzellen erkennt und andererseits in Nachrichtenzellen jeweils auftretende Bits zu Bitgruppen mit jeweils einer festgelegten Anzahl von Bits, beispielsweise 8 Bits, zusammenfaßt und die einzelnen Bitgruppen (Oktetts) in paralleler Form über ein Leitungssystem bereitstellt. Dieser Schnittstelleneinrichtung sind ein Register Reg1 als Verzögerungseinrichtung sowie ein Decodierer DEC nachgeschaltet. Dieses Register Reg1 wird von sämtlichen an die bereits erwähnte Koppelanordnung KA weiterzuleitenden Nachrichtenzellen durchlaufen. Die Verzögerungszeit ist dabei so festgelegt, daß durch die nachfolgend beschriebene Schaltungsanordnung vor einer Weiterleitung der gerade aufgenommenen Nachrichtenzelle an die Koppelanordnung KA eine Überprüfung der Einhaltung der für die jeweilige virtuelle Verbindung festgelegten Übertragungsbitrate durchgeführt werden kann.

Der Zellenkopf einer in das Register Regl aufgenommenen Nachrichtenzelle wird zusätzlich dem gerade erwähnten Decodierer DEC zugeführt, der durch Decodieren der in diesem Zellenkopf enthaltenen virtuellen Kanalnummer Adressensignale bereitstellt, die einem Bitratenspeicher BSP über erste Eingänge eines Multiplexers M zugeführt sind. Der Bitratenspeicher BSP weist für jede der auf der zugehörigen Zubringerleitung E möglichen virtuellen Verbindungen einen gesonderten Speicherbereich auf. Die einzelnen Speicherbereiche sind dabei nach Maßgabe der in Nachrichtenzellen enthaltenen, von dem zuvor erwähnten Decodierer DEC decodierten virtuellen Kanalnummern individuell ansteuerbar. Können beispielsweise über die betreffende Zubringerleitung n mit "0" bis "n-1" bezeichnete virtuelle Verbindungen verlaufen, so sind diesen also, wie in FIG 2 angedeutet ist, mit "0" bis "n-1" bezeichnete Speicherbereiche zugeordnet. Diese sind Teil einer der jeweiligen virtuellen Verbindung individuell zugeordneten Zähleinrichtung. Die einzelnen Speicherbereiche dienen dabei einerseits für die Speicherung eines noch zu erläuternden momentanen Zählerstandes der jeweiligen Zähleinrichtung sowie eines ebenfalls noch zu erläuternden individuell festlegbaren Bitratenwertes. Diese Speicherung erfolgt unter der Steuerung einer in FIG 2 mit ST bezeichneten Steuereinrichtung, die über Leitungssysteme einerseits mit Dateneingängen und Datenausgängen des Bitratenspeichers BSP und andererseits mit zweiten Eingängen des bereits erwähnten Multiplexers M sowie über eine Steuerleitung SL mit der Schnittstelleneinrichtung S verbunden ist. Die für die virtuellen Verbindungen gespeicherten momentanen Zählerstände und Bitratenwerte sind im übrigen entsprechend ihrer Zugehörigkeit zu den einzelnen virtuellen Verbindungen in FIG 2 mit BRO bis BRn-1 bzw. ZSTO bis ZSTn-1 bezeichnet.

Sämtlichen einer Zubringerleitung zugeordneten Zähleinrichtungen ist neben einem individuellen Speicherbereich des Bitratenspeichers BSP eine gemeinsame, den einzelnen Zähleinrichtungen im Multiplexbetrieb zur Verfügung stehende Addiereinrichtung zugehörig. Diese Addiereinrichtung weist zwei mit Reg2 und Reg3 bezeichnete Register sowie einen Addierer ADD auf. Ladeeingänge dieser Register stehen über ein Leitungssystem mit Datenausgängen des Bitratenspeichers BSP in Verbindung. Ausgangsseitig sind die Register Reg2 und Reg3 an Eingänge des Addierers ADD angeschlossen. Dieser weist mit Dateneingängen des Registers Reg3 verbundene Summensignalausgänge sowie einen mit einem gesonderten Registerplatz des Registers Reg3 verbundenen Überlaufausgang auf. Das Register Reg3 steht ausgangsseitig im übrigen auch noch mit der Steuereinrichtung ST in Verbindung.

Nachdem zuvor der Aufbau der in FIG 2 dargestellten Behandlungseinrichtung BHE erläutert worden ist, wird nunmehr auf die Wirkungsweise einer solchen Behandlungseinrichtung näher eingegangen.

Wie bereits erwähnt, werden in die den einzelnen virtuellen Verbindungen zugeordneten Speicherbereiche des Bitratenspeichers BSP individuell festgelegte Bitratenwerte eingetragen. Die Festlegung erfolgt im Zuge des Aufbaues der jeweiligen virtuellen Verbindung durch die Steuereinrichtung ST, und zwar nach Maßgabe einer von der die gerade aufzubauende Verbindung wünschenden Teilnehmereinrichtung (rufende Teilnehmereinrichtung) angegeben übertragungsbitrate. Dabei kann so vorgegangen sein, daß durch die Steuereinrichtung ST einer maximal angebbaren Übertragungsbitrate ein normierter Bitratenwert, beispielsweise der Bitratenwert "1", zugeordnet wird. Für eine von der maximal angebbaren Übertragungsbitrate abweichende Übertragungsbitrate beträgt dagegen der zugeordnete Bitratenwert ein dem Verhältnis der maximal angebbaren Übertragungsbitrate zu der aktuellen Übertragungsbitrate entsprechendes Vielfaches des normierten Bitratenwertes. Beträgt also eine von einer Teilnehmereinrichtung angegebene übertragungsbitrate lediglich die Hälfte der maximal angebbaren übertragungsbitrate, so wird der Bitratenwert mit "2" festgelegt. Nach einer solchen Festlegung wird der jeweilige Bitratenwert im Zuge eines Schreibzyklus von der Steuereinrichtung ST her durch eine entsprechende Adressierung über den Multiplexer M in den für die jeweilige virtuelle Verbindung in Frage kommenden Speicherbereich des Bitratenspeichers BSP für die gesamte Verbindungsdauer eingetragen.

Von der Steuereinrichtung ST her werden außerdem im Zuge periodisch wiederholt durchgeführter Steuerzyklen jeweils sämtliche Speicherbereiche des Bitratenspeichers BSP durch über den Multiplexer M fortlaufend bereitgestellte Adressensignale nacheinander für eine noch zu erläuternde Abfrage des darin jeweils gespeicherten momentanen Zählerstandes angesteuert. Nach erfolgter Abfrage wird dann der jeweilige momentane Zählerstand in einen festgelegten Anfangszählerstand überführt. Der Anfangszählerstand möge dabei beispielsweise mit "0" festgelegt sein.

Tritt nun auf der in FIG 2 mit E bezeichneten Zubringerleitung eine Nachrichtenzelle auf, so wird diese von der Schnittstelleneinrichtung S her nach einer oktettweisen Umsetzung dem Register Reg1 zugeführt. Das Auftreten der Nachrichtenzelle wird dabei auch der Steuereinrichtung ST durch ein über die obenerwähnte Steuerleitung SL übertragenes Meldesignal angezeigt. Außerdem übernimmt der Decodierer DEC von der Schnittstelleneinrichtung S her den in der gerade auftretenden Nachrichtenzelle enthaltenen Zellenkopf.

Auf das Auftreten des Meldesignals hin steuert die Steuereinrichtung ST einen Lesezyklus in dem Bitratenspeicher BSP nach Maßgabe der von dem Decodierer DEC über den Multiplexer M bereitgestellten Adressensignale. Dadurch stellt dieser Bitratenspeicher an seinen Datenausgängen die in dem gerade adressierten Speicherbereich gespeicherten Angaben bereit. Bei diesen handelt es sich, wie bereit oben erwähnt, um einen für die jeweilige virtuelle Verbindung festgelegten Bitratenwert und einen momentanen Zählerstand. Dieser momentane Zählerstand, der beispielsweise der Anfangszählerstand "0" sein möge, wird dabei über Ladeeingänge in das Register Reg3 übernommen. Dagegen wird der von dem Bitratenspeicher gerade bereitgestellte Bitratenwert dem Register Reg2 zugeführt. Der mit diesen Registern verbundene Addierer ADD addiert daraufhin den Bitratenwert zu dem momentanen Zählerstand, d.h. in dem vorliegenden Fall zu dem Anfangszählerstand "0". Der daraus resultierende veränderte momentane Zählerstand wird anschließend in das Register Reg3 eingetragen, und zwar unter Überschreiben des zuvor über Ladeeingänge aufgenommenen Anfangszählerstandes. Anschließend erfolgt unter der Steuerung der Steuereinrichtung ST ein Schreibzyklus in dem Bitratenspeicher BSP. Dabei wird der nunmehr in dem Register Reg3 gespeicherte momentane Zählerstand in den durch den Decodierer DEC über den Multiplexer M adressierten Speicherbereich unter Überschreiben des bisher darin gespeicherten momentanen Zählerstandes eingetragen. Damit ist die Erfassung der gerade in die in FIG 2 dargestellte Behandlungseinrichtung BHE aufgenommenen Nachrichtenzelle abgeschlossen.

Die gerade erläuterten Vorgänge wiederholen sich mit jedem Auftreten einer Nachrichtenzelle auf der in FIG 2 mit E bezeichneten Zubringerleitung, so daß am Ende des jeweiligen, von der Steuereinrichtung ST durchgeführten Steuerzyklus für sämtliche über die Zubringerleitung E verlaufenden virtuellen Verbindungen ein individuell ermittelter momentaner Zählerstand in dem Bitratenspeicher BSP gespeichert ist.

Der Addierer ADD ist im übrigen so ausgelegt, daß dieser bei der oben angegebenen Bildung eines neuen momentanen Zählerstandes ein Überschreiten eines festgelegten Grenzwertes durch ein Überlaufsignal in Form eines Überlaufbits über den oben erwähnten Überlaufausgang anzeigt. Dieses Überlaufbit wird zunächst in den bereits oben erwähnten gesonderten Registerplatz des Registers Reg3 übernommen und anschließend als Teil des von dem Addierer ADD bereitgestellten momentanen Zählerstand in den Bitratenspeicher BSP übertragen.

Der gerade erwähnte Grenzwert ist nach Maßgabe der oben erläuterten Bitratenwerte und der Dauer eines Steuerzyklus so festgelegt, daß dieser durch einen momentanen Zählerstand immer dann erreicht bzw. überschritten ist, wenn im Zuge der jeweiligen virtuellen Verbindung Nachrichtenzellen mit einer gegenüber der ursprünglich von einer Teilnehmereinrichtung angegebenen Übertragungsbitrate höheren Übertragungsbitrate übertragen werden. Ob ein derartiges Überschreiten einer angegebenen Übertragungsbitrate für einzelne virtuelle Verbindungen vorliegt, wird im Zuge des nächsten von der Steuereinrichtung ST durchgeführten Steuerzyklus durch die oben erwähnte Abfrage der in den einzelnen Speicherbereichen des Bitratenspeichers BSP gespeicherten momentanen Zählerstände ermittelt. Dabei wird bei dem vorliegenden Ausführungsbeispiel lediglich überprüft, ob bei dem jeweiligen momentanen Zählerstand ein oben erwähntes Überlaufbit gespeichert ist. Bei Vorliegen eines solchen Überlaufbits kann dann beispielsweise so vorgegangen sein, daß im Zuge der jeweiligen virtuellen Verbindung nachfolgend eintreffende Nachrichtenzellen von einer Weiterleitung an die in FIG 1 dargestellte Koppelanordnung KA ausgeschlossen sind.

Vorstehend wurde lediglich der Fall betrachtet, daß im Zuge von virtuellen Verbindungen Nachrichtensignale in Nachrichtenzellen fester Länge übertragen werden. Weisen dagegen derartige Nachrichtenzellen eine variable Länge auf, so können die zuvor beschriebenen Steuerzyklen auch derart modifiziert sein, daß mit jedem Auftreten einer Nachrichtenzelle der momentane Zählerstand in der oben angegebenen Weise beispielsweise nach jeweils einer festgelegten Anzahl von der gerade auftretenden Nachrichtenzelle zugehörigen Oktetts verändert ist. Die Anzahl der Oktetts richtet sich dabei nach der Genauigkeit, mit der die Überwachung angegebener Überwachungsbitraten erfolgen soll.

Bei dem vorstehend beschriebenen Ausführungsbeispiel verändern sich die Toleranzgrenzen für die Anzeige des Überschreitens angegebenener Übertragungsbitraten aufgrund der oben erläuterten Festlegung der individuellen Bitratenwerte für die einzelnen virtuellen Verbindungen und des einheitlichen Grenzwertes umgekehrt proportional zu den angegebenen Übertragungsbitraten. Ist für die einzelnen angebbaren Übertragungsbitraten eine individuelle Festlegung einer solchen Toleranzgrenze gewünscht, so kann das vorstehend beschriebene Ausführungsbeispiel auch derart modifiziert sein, daß für jede der virtuellen Verbindungen ein Grenzwert sowie ein diesem zugeordneter Bitratenwert individuell nach Maßgabe einer von einer Teilnehmereinrichtung angegebenen Übertragungsbitrate, der Dauer eines Steuerzyklus sowie der jeweils gewünschten Toleranzgrenze ermittelt werden. Grenzwerte und zugehörige Bitratenwerte werden dabei gemeinsam in die oben erwähnten, den einzelnen virtuellen Verbindungen zugeordneten Speicherbereiche des Bitratenspeichers BSP eingetragen. Bei der Durchführung eines oben beschriebenen Lesezyklus werden dann dem Addierer ADD beispielsweise über ein gegenüber dem in FIG 2 dargestellten Register Reg2 erweitertes Register sowohl der jeweiligen Bitratenwert als auch der zugeordnete Grenzwert zugeführt. Anhand dieser Werte bestimmt der Addierer zunächst in der oben angegebenen Weise einen neuen momentanen Zählerstand. Dieser wird anschließend mit dem zugeführten Grenzwert verglichen, wobei bei dessen Überschreiten durch den gerade ermittelten momentanen Zählerstand ein dem bereits oben erwähnten Überlaufsignal entsprechendes Vergleichssignal von dem Addierer her abgegeben wird. Die daraufhin durchzuführenden Steuerungsvorgänge entsprechen dann den bereits oben erläuterten Steuerungsvorgängen.

Abschließend sei auch noch darauf hingewiesen, daß die vorstehend beschriebenen Ausführungsbeispiele auch derart modifiziert sein können, daß einerseits ein am Ausgang des Addierers ADD auftretendes Überlaufbit direkt der Steuereinrichtung ST zugeführt ist, um von dieser her sofort die Weiterleitung (von der jeweiligen virtuellen Verbindung zugehörigen Nachrichtenzellen zu verhindern. Andererseits können aber auch die den einzelnen virtuellen Verbindungen zugeordneten, aus den einzelnen Speicherbereichen des Bitratenspeichers BSP und der oben erläuterten Addiereinrichtung gebildeten Zähleinrichtungen in anderer Weise realisiert sein. So ist es beispielsweise möglich, den einzelnen virtuellen Verbindungen jeweils einen gesonderten Zähler zuzuordnen, dessen momentaner Zählerstand auf jede Ansteuerung hin um einen für die jeweilige virtuelle Verbindung festgelegten Bitratenwert verändert ist.

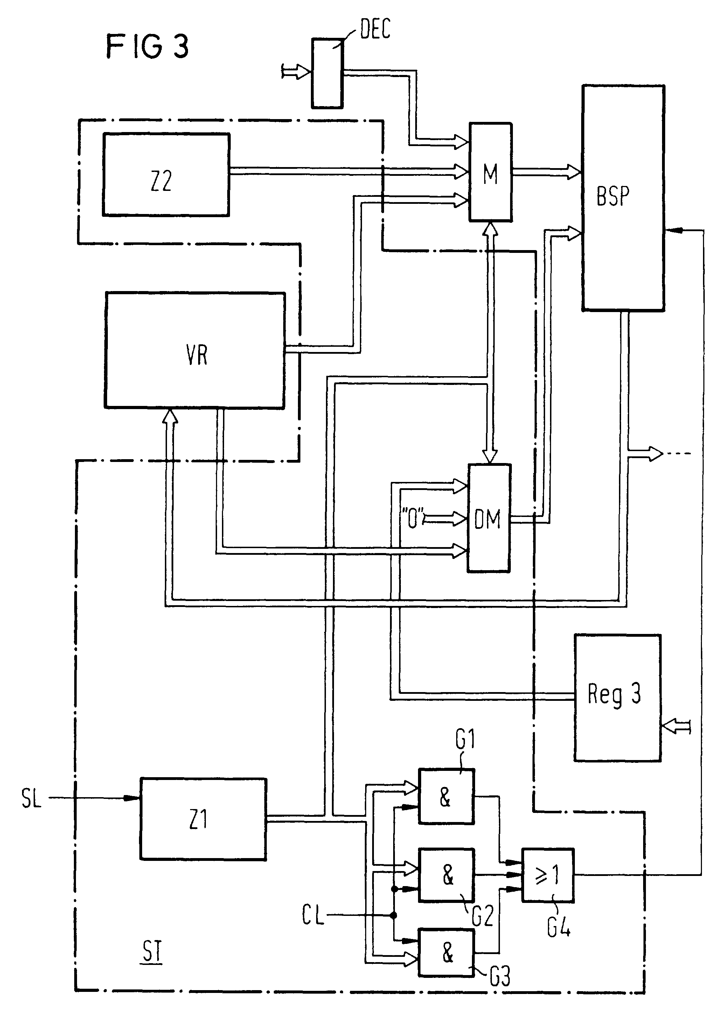

In FIG 3 sind ein Ausführungsbeispiel für die anhand der FIG 2 erläuterten Steuereinrichtung ST sowie deren Verbindung zu den in FIG 2 angegebenen Schaltungselementen dargestellt. Dabei wird für die nachfolgende Erläuterung als Beispiel davon ausgegangen, daß Nachrichtenzellen fester Länge und in Übertragungspausen diesen entsprechende Leerzellen übertragen werden.

Gemäß FIG 3 weist die Steuereinrichtung ST eine erste, mit der Steuerleitung SL (FIG 2) verbundene Zähleranordnung Z1 auf, die durch ein über diese Steuerleitung übertragenes Steuersignal synchronisiert wird und mit einer der Anzahl der in einer Nachrichtenzelle bzw. Leerzelle auftretenden Oktetts entsprechenden Zählperiode umläuft. Dabei werden von dieser Zähleranordnung drei festgelegte Zählerstände als Adressensignale bereitgestellt. Diese Adressensignale werden an drei jeweils auf eines dieser Adressensignale ansprechende UND-Glieder G1 bis G3 abgegeben. Die UND-Glieder sind außerdem gemeinsam mit Taktimpulsen CL beaufschlagt, so daß von diesen UND-Gliedern nacheinander innerhalb einer Nachrichtenzelle bzw. Leerzelle eine vorgegebene Anzahl von Taktimpulsen bereitgestellt wird, die über ein nachgeschaltetes ODER-Glied G4 dem Bitratenspeicher BSP als Schreibimpulse zugeführt sind.

Außerdem werden die von der Zähleranordnung Z1 bereitgestellten Adressensignale an Steuereingänge des in FIG 2 schematisch dargestellten, als Adressenmultiplexer dienenden Multiplexers M und eines diesem zugeordneten Datenmultiplexers DM abgegeben. Die Ausgänge dieser Multiplexer sind an Adressen- und Dateneingänge des Bitratenspeichers BSP herangeführt. Eingangsseitig sind an den Multiplexer M über drei Leitungssysteme neben dem bereits in FIG 2 dargestellten Decodierer DEC eine zweite Zähleranordnung Z2 sowie ein Adressenbus eines sämtlichen Behandlungseinrichtungen BHE (FIG 1) übergeordneten Vermittlungsrechners VR beispielsweise in Form einer Mikroprozessoranordnung angeschlossen. Durch die Zähleranordnung Z2, die mit eiher der Anzahl der in dem Bitratenspeicher BSP vorhandenen Speicherbereiche entsprechenden Zählperiode umläuft, werden dabei fortlaufend Adressensignale nach Maßgabe der Dauer eines oben erwähnten, periodisch wiederholt durchgeführten Speicherzyklus bereitgestellt.

Darüber hinaus sind an den Datenmultiplexer DM über drei Leitungssysteme eingangsseitig das in FIG 2 dargestellte Register Reg3, ein festgelegter Anfangszählerstand beispielsweise in Form eines Binärwertes "0" sowie ein Datenbus des Vermittlungsrechners VR herangeführt.

Durch die von der Zähleranordnung Z1 abgegebenen Adressensignale werden innerhalb einer Nachrichtenzelle bzw. Leerzelle drei gesonderte Bearbeitungszeitspannen festgelegt. Eine erste der Bearbeitungszeitspannen, während der der Decodierer DEC und das Register Reg3 über die Multiplexer M und DM mit dem Bitratenspeicher BSP verbunden sind, dient dabei bei Auftreten einer Nachrichtenzelle für das Auslesen des zugeordneten Zählerstandes und des festgelegten Bitratenwertes aus dem Bitratenspeicher und für das anschließende Einschreiben des aktualisierten Zählerstandes in diesen Bitratenspeicher.

Eine zweite Bearbeitungszeitspanne, während der die Zähleranordnung Z2 sowie der bereitgestellte Anfangszählerstand über die Multiplexer M und DM mit dem Bitratenspeicher verbunden sind, ist für die im Rahmen der oben erwähnten Speicherzyklen periodisch vorgesehene Abfrage der in dem Bitratenspeicher gespeicherten Zählerstände und für das anschließende Überführen des jeweiligen Zählerstandes in den festgelegten Anfangszählerstand reserviert. Da durch die Zähleranordnung Z2 fortlaufend Adressensignale bereitgestellt werden, erfolgt im Zuge eines über eine Mehrzahl von Nachrichtenzellen bzw. Leerzellen sich erstreckenden Speicherzyklus für sämtliche in dem Bitratenspeicher BSP gespeicherten Zählerstände eine Abfrage und anschließende Überführung in den Anfangszählerstand. Die Auswertung der einzelnen abgefragten Zählerstände erfolgt im übrigen durch den Vermittlungsrechner VR.

Während einer dritten Bearbeitungszeitspanne steht schließlich der Vermittlungsrechner VR mit seinem Adressenbus und Datenbus über die Multiplexer M und DM mit dem Bitratenspeicher BSP in Verbindung. Dadurch können durch diesen Vermittlungsrechner einerseits beim Aufbau einer virtuellen Verbindung der oben erwähnte Anfangszählerstand sowie der für diese virtuelle Verbindung festgelegte Bitratenwert in den in Frage kommenden Speicherbereich des Bitratenspeichers eingetragen werden. Andererseits können beim Abbau einer virtuellen Verbindung der für diese in Frage kommende Bitratenwert und der zugehörige momentane Zählerstand in dem Bitratenspeicher gelöscht werden.

Abschließend sei darauf hingewiesen, daß es sich bei der gerade erläuterten Steuereinrichtung ST lediglich um ein zweckmäßiges Ausführungsbeispiel handelt. Die von dieser Steuereinrichtung zu erfüllenden Funktionen können jedoch auch durch einen anderweitigen schaltungstechnischen Aufbau realisiert werden.

## Patentansprüche

1. Schaltungsanordnung zum Überprüfen der Einhaltung der für virtuelle Verbindungen festgelegten Übertragungsbitraten bei der Übertragung von Nachrichtenzellen nach einem asynchronen Übertragungsverfahren im Zuge der virtuellen Verbindungen in einer die Nachrichtenzellen über Zubringerleitungen (E1,..., En) aufnehmenden ATM-Vermittlungsanlage (BVA) mit Hilfe von den Zubringerleitungen zugeordneten Zähleinrichtungen (BSP, Reg2, Reg3, ADD),
wobei den Zubringerleitungen jeweils eine der Anzahl der über diese verlaufenden virtuellen Verbindungen entsprechende Anzahl von Zähleinrichtungen zugeordnet ist, welche derart ausgebildet sind,
daß diese bei Auftreten von Nachrichtenzellen nach Maßgabe eines in diesen jeweils enthaltenen, die jeweilige virtuelle Verbindung bezeichnenden Zellenkopfes für die Übertragungsdauer der jeweiligen Nachrichtenzelle individuell ansteuerbar sind und dabei der momentane Zählerstand der jeweiligen Zähleinrichtung um einen festgelegten Wert verändert wird und daß von der jeweiligen Zähleinrichtung bei Überschreiten eines festgelegten Grenzwertes durch den momentanen Zählerstand ein entsprechendes Meldesignal abgegeben wird bzw. das Vorliegen eines solchen Meldesignals abfragbar ist,
**dadurch gekennzeichnet**,
daß die Zähleinrichtungen (BSP, Reg2, Reg3, ADD) weiter derart ausgebildet sind,
daß diese jeweils lediglich für eine unidirektionale Zählrichtung ausgelegt sind und in festgelegten Zeitintervallen periodisch wiederholt in einen Anfangszählerstand überführt werden,
daß auf jede Ansteuerung der jeweiligen Zähleinrichtung hin deren momentaner Zählerstand wenigstens einmal während des Auftretens der jeweiligen Nachrichtenzelle um einen Bitratenwert geändert wird, welcher der festgelegten Übertragungsbitrate für die jeweilige virtuelle Verbindung entspricht,
daß der Grenzwert für die jeweilige Zähleinrichtung nach Maßgabe des der jeweiligen virtuellen Verbindung zugeordneten Bitratenwertes und der Dauer der Zeitintervalle festgelegt ist
und daß vor der Überführung der jeweiligen Zähleinrichtung in den Anfangszählerstand gegebenenfalls das Meldesignal abgegeben wird bzw. das Vorliegen eines solchen abfragbar ist.

2. Schaltungsanordnung nach Anspruch 1, **dadurch gekennzeichnet**,
daß die Zählereinrichtungen (BSP, Reg2, Reg3, ADD) weiter derart ausgebildet sind, daß auf eine bei Auftreten einer Nachrichtenzelle erfolgende Ansteuerung einer der Zähleinrichtungen hin deren momentaner Zählerstand nach jeweils einer festgelegten Anzahl von der gerade auftretenden Nachrichtenzelle zugehörigen Bits um den der jeweiligen Zähleinrichtung zur Verfügung stehenden Bitratenwert veränderbar ist.

3. Schaltungsanordnung nach Anspruch 1 oder 2,
**dadurch gekennzeichnet**,
daß einer maximal festlegbaren Übertragungsbitrate ein normierter Bitratenwert ("1") zugeordnet ist,
daß nach Maßgabe dieses normierten Bitratenwertes und der festgelegten Dauer der Zeitintervalle für sämtliche Zähleinrichtungen (BSP, Reg2, Reg3, ADD) ein einheitlicher maximaler Zählerstand festgelegt ist
und daß für eine von der maximal festlegbaren Übertragungsbitrate abweichende aktuelle Übertragungsbitrate der zugeordnete Bitratenwert ein dem Verhältnis der maximal festlegbaren Übertragungsbitrate zu der aktuellen Übertragungsbitrate entsprechendes Vielfaches des normierten Bitratenwertes beträgt.

4. Schaltungsanordnung nach Anspruch 1 oder 2,
**dadurch gekennzeichnet**,
daß für jede der Zähleinrichtungen der Bitratenwert und der maximale Zählerstand gesondert nach Maßgabe der für die jeweilige virtuelle Verbindung festgelegten Übertragungsbitrate und der festgelegten Dauer der Zeitintervalle festgelegt sind.

5. Schaltungsanordnung nach einem der Ansprüche 1 bis 3,
**dadurch gekennzeichnet**,
daß die einer Zubringerleitung zugeordneten Zähleinrichtungen derart ausgebildet sind,
daß diese jeweils aus einem individuellen, für die Speicherung des für die jeweilige virtuelle Verbindung zugeordneten Bitratenwertes und des jeweiligen momentanen Zählerstandes dienenden Speicherbereich eines Schreib-Lese-Speichers (BSP) sowie aus einer mit dem Schreib-Lese-Speicher verbundenen, sämtlichen Zähleinrichtungen gemeinsamen Addiereinrichtung (Reg2, Reg3, ADD) gebildet sind,
daß in die Speicherbereiche im Zuge eines von einer Steuereinrichtung (ST) her aktivierten, sämtliche Speicherbereiche einbeziehenden Speicherzyklus periodisch wiederholt jeweils ein festgelegter Anfangszählerstand als momentaner Zählerstand eintragbar ist,
daß die einzelnen Speicherbereiche bei Auftreten von Nachrichtenzellen nach Maßgabe des in diesen jeweils enthaltenen Zellenkopfes für die Übertragungsdauer der jeweiligen Nachrichtenzelle individuell in einen Steuerzyklus einbeziehbar sind, in dessen Verlauf zunächst der in dem jeweiligen Speicherbereich gerade gespeicherte momentane Zählerstand und der diesem zugehörige Bitratenwert der Addiereinrichtung (Reg2, Reg3, ADD) für eine Änderung des betreffenden momentanen Zählerstandes zugeführt werden und anschließend der von der Addiereinrichtung bereitgestellte momentane Zählerstand in den jeweiligen Speicherbereich unter Überschreiben des darin bisher gespeicherten momentanen Zählerstandes eingetragen wird,
und daß von der Addiereinrichtung her bei Überschreiten des festgelegten maximalen Zählerstandes durch den gerade bereitgestellen momentanen Zählerstand ein das Überschreiten der für die jeweilige virtuelle Verbindung festgelegten Übertragungsbitrate anzeigendes Meldesignal gesondert bereitgestellt wird.

## Claims

1. Circuit arrangement for checking the adherence to transmission bit rates defined for virtual connections during the transmission of message cells according to an asynchronous transmission method in the course of the virtual connections in an ATM switching system (BVA), which receives the message cells via offering trunks (E1, ..., En), with the aid of counting devices (BSP, Reg2, Reg3, ADD) assigned to the offering trunks, each of the offering trunks being assigned a number of counting devices which corresponds to the number of virtual connections passing via the said offering trunks, which counting devices are designed in such a way that they can be individually driven, when message cells appear, for the transmission duration of the respective message cell according to a cell header contained in each of the said cells and designating the respective virtual connection, and in the process the instantaneous counter reading of the respective counting device is changed by a defined value, and that a corresponding indication signal is emitted by the respective counting device when the instantaneous counter reading exceeds a defined limit value, or the presence of such an indication signal can be interrogated, characterized in that the counting devices (BSP, Reg2, Reg3, ADD) are further designed in such a way that they are in each case fashioned only for a unidirectional counting direction and are periodically repeatedly transferred to an initial counter reading at defined time intervals, that each time the respective counting device is driven, in response the instantaneous counter reading thereof is changed at least once during the appearance of the respective message cell by a bit rate value which corresponds to the defined transmission bit rate for the respective virtual connection, that the limit value for the respective counting device is defined according to the bit rate value assigned to the respective virtual connection and according to the duration of the time intervals, and that before the respective counting device is transferred to the initial counter reading, if appropriate the indication signal is emitted or the presence of such a signal can be interrogated.

2. Circuit arrangement according to Claim 1, characterized in that the counter devices (BSP, Reg2, Reg3, ADD) are further designed in such a way that in response to one of the counting devices being driven when a message cell appears, the instantaneous counter reading of the said counting device can be changed, in each case after a defined number of bits associated with the message cell which is just appearing, by the bit rate value which is available to the respective counting device.

3. Circuit arrangement according to Claim 1 or 2, characterized in that a normalized bit rate value ("1") is assigned to a maximally definable transmission bit rate, in that a uniform, maximum counter reading is defined for all of the counting devices (BSP, Reg2, Reg3, ADD) according to this normalized bit rate value and according to the defined duration of the time intervals, and in that the assigned bit rate value for the current transmission bit rate which deviates from the maximally definable transmission bit rate is a multiple of the normalized bit rate value, which multiple corresponds to the ratio of the maximally definable transmission bit rate and the current transmission bit rate.

4. Circuit arrangement according to Claim 1 or 2, characterized in that the bit rate value and the maximum counter reading for each of the counting devices are defined separately according to the transmission bit rate defined for the respective virtual connection and according to the defined duration of the time intervals.

5. Circuit arrangement according to one of Claims 1 to 3, characterized in that the counting devices assigned to an offering trunk are designed in such a way that they are each formed from an individual memory area, which serves to store the bit rate value assigned for the respective virtual connection and to store the respective instantaneous counter reading, of a read/write memory (BSP), as well as from an adding device (Reg2, Reg3, ADD) which is connected to the read/write memory and is common to all of the counting devices, that a defined initial counter reading can be periodically repeatedly entered in each case as an instantaneous counter reading into the memory areas in the course of a memory cycle which is activated from a control device (ST) and incorporates all of the memory areas, that when message cells appear, the individual memory areas can be individually incorporated into a control cycle for the transmission duration of the respective message cell according to the cell header contained in each of the said message cells, in the course of which control cycle, firstly, the instantaneous counter reading just stored in the respective memory area and the bit rate value associated with this reading are fed to the adding device (Reg2, Reg3, ADD) for changing the instantaneous counter reading in question and, subsequently, the instantaneous counter reading provided by the adding device is entered into the respective memory area while overwriting the instantaneous counter reading hitherto stored therein, and that an indication signal which indicates that the transmission bit rate defined for the respective virtual connection has been exceeded is separately provided from the adding device when the instantaneous counter reading which has just been provided exceeds the defined maximum counter reading.

## Revendications

1. Montage destiné à vérifier que les débits binaires de transmission fixés pour des communications virtuelles sont respectés lors de la transmission de cellules d'informations suivant un procédé de transmission asynchrone au cours des communications virtuelles dans une installation (BVA) de commutation ATM recevant les cellules d'informations par l'intermédiaire de circuits (E1,...,En) d'arrivée, à l'aide de dispositifs (BSP, Reg2, Reg3, ADD) de comptage associés aux circuits d'arrivée,
dans lequel il est associé aux circuits d'arrivée, des dispositifs de comptage, qui sont en un nombre correspondant au nombre de communications virtuelles s'effectuant par ces circuits d'arrivée, qui sont formés de sorte que
ces dispositifs de comptage puissent être commandés individuellement lors de l'apparition de cellules d'informations en fonction d'un en-tête de cellule compris dans chacune de ces cellules et désignant la communication virtuelle respective, pendant la durée de transmission de la cellule d'information, qu'ainsi, l'état de comptage instantané de chaque dispositif de comptage soit changé d'une valeur fixée et qu'il soit fourni par le dispositif de comptage considéré, lorsque son état de comptage instantané est supérieur à une valeur limite fixée, un signal d'avertissement correspondant ou que la présence d'un signal d'avertissement de ce genre puisse être contrôlée,
caractérisé en ce que les dispositifs (BSP, Reg2, Reg3, ADD) de comptage sont perfectionnés par le fait que ceux-ci sont prévus exclusivement pour un dispositif de comptage unidirectionnel et passent à un état de comptage initial de manière répétée, périodiquement et à des intervalles de temps fixés,
à chaque commande du dispositif de comptage considéré, son état de comptage instantané est changé au moins une fois, pendant l'apparition de la cellule d'information, d'une valeur de débit binaire, qui correspond au débit binaire de transmission fixé pour la communication virtuelle considérée,
la valeur limite pour le dispositif de comptage considéré est fixée en fonction de la valeur du débit binaire associée à la communication virtuelle considérée et de la durée des intervalles de temps et
éventuellement le signal d'avertissement est fourni ou la présence d'un signal d'avertissement de ce genre peut être contrôlée avant le passage du dispositif de comptage considéré à l'état de comptage initial.

2. Montage suivant la revendication 1,
caractérisé en ce que
les dispositifs (BSP, Reg2, Reg3, ADD) de comptage sont perfectionnés de sorte qu'à la suite d'une commande, s'effectuant à l'apparition d'une cellule d'information, d'un des dispositifs de comptage, son état de comptage instantané peut être changé, suivant un nombre fixé de bits appartenant à la cellule d'information qui vient d'apparaître, de la valeur de débit binaire qui est à la disposition du dispositif de comptage considéré.

3. Montage suivant la revendication 1 ou 2,
caractérisé en ce que
une valeur ("1") normée de débit binaire est associée à un débit binaire de transmission pouvant être fixé au maximum,
un état de comptage maximum uniforme est fixé pour tous les dispositifs (BSP, Reg2, Reg3, ADD) de comptage en fonction de cette valeur normée de débit binaire et de la durée fixée des intervalles de temps,
et pour un débit binaire de transmission actuel s'écartant du débit binaire de transmission pouvant être fixé au maximum, la valeur de débit binaire associée est un multiple de la valeur normée de débit binaire, lequel correspond au rapport du débit binaire de transmission pouvant être fixé au maximum au débit binaire de transmission actuel.

4. Montage suivant la revendication 1 ou 2,
caractérisé en ce que
la valeur de débit binaire et l'état maximum de comptage sont fixés séparément pour chacun des dispositifs de comptage en fonction du débit binaire de transmission fixé pour la communication virtuelle considérée et de la durée fixée des intervalles de temps.

5. Montage suivant l'une des revendications 1 à 3,
caractérisé en ce que
les dispositifs de comptage associés à un circuit d'arrivée sont formés de telle sorte que
ils soient formés chacun d'une zone de mémoire individuelle, qui sert à la mémorisation de la valeur de débit binaire associée pour la communication virtuelle considérée et à la mémorisation de l'état de comptage instantané, cette zone de mémoire individuelle étant celle d'une mémoire (BSP) à écriture-lecture, ainsi que d'un dispositif (Reg2, Reg3, ADD) d'addition relié à la mémoire d'écriture-lecture et commun à tous les dispositifs de comptage,
un état comptage initial fixé puisse être introduit de manière répétée et périodique comme état de comptage instantané dans les zones de mémoire au cours d'un cycle de mémorisation activé à partir d'un dispositif (ST) de commande et incluant toutes les zones de mémoire,
les diverses zones de mémoire puissent être englobées individuellement, lors de l'apparition de cellules d'informations, en fonction de l'en-tête de cellule contenu dans celles-ci, pour la durée de transmission de la cellule d'information considérée, dans un cycle de commande, au cours duquel l'état de comptage instantané qui vient d'être mémorisé dans la zone de mémoire considérée et la valeur de débit binaire, associée à celui-ci, sont envoyés au dispositif d'addition (Reg2, Reg3, ADD) pour un changement de l'état de comptage instantané concerné et ensuite, l'état de comptage instantané tenu prêt par le dispositif d'addition est introduit dans la zone de mémoire en réenregistrant à la place de l'état de comptage instantané mémorisé jusqu'à présent dans cette zone,
un signal d'avertissement indiquant le dépassement du débit binaire de transmission fixé pour la communication virtuelle considérée est tenu prêt séparément à partir du dispositif d'addition, lorsque l'état de comptage instantané justement tenu prêt est plus grand que l'état de comptage maximum fixé.
